# FASCICULE DE BREVET EUROPEEN

(11) **EP 2 824 336 B1**
(45) Date de publication et mention de la délivrance du brevet: **06.06.2018**
(21) Numéro de dépôt: 14176699.8
(22) Date de dépôt: 11.07.2014
(51) Int. Cl.: F16B 15/00, F16B 15/08, F16L 3/04, F24D 3/14

(54) **Grappe d'attaches pour conduite tubulaire de plancher chauffant**
Klammeranordnung für Heizschlange einer Fußbodenheizung
Arrangement of fasteners for a heated tubular floor pipe

(30) Priorité: 11.07.2013 FR 1356830
(43) Date de publication de la demande: 14.01.2015
(73) Titulaire: RAM CHEVILLES ET FIXATIONS, 91320 Wissous (FR)
(72) Inventeur: Sergent, Gilbert, 13610 Le Puy-Sainte-Réparade (FR)
(74) Mandataire: Gendron, Vincent Christian

(56) Documents cités:
- DE-A1- 4 009 573
- DE-A1-102006 022 467
- DE-A1-102011 013 292
- DE-U1- 20 017 260
- DE-U1- 20 201 020
- FR-A1- 2 492 952

## Description

La présente invention se rapporte à une grappe d'attaches destinée à être chargée dans une agrafeuse pour pouvoir attacher les conduites tubulaires sur une paroi de plancher.

Un domaine d'application envisagé est notamment celui des agrafes, ou attaches, pour conduites de plancher chauffant à basse température.

Ce type de planchers chauffants est réalisé en formant tout d'abord une première chape de béton que l'on recouvre d'une couche d'un support synthétique, du type mousse de polymères, par exemple en polyuréthane. Un réseau de conduites tubulaires est fixé sur cette couche synthétique pour faire circuler un fluide caloporteur. Après que les conduites tubulaires ont été fixées sur cette couche synthétique, l'ensemble est recouvert de la chape de béton précitée pour noyer les conduites dans le béton et former le plancher d'un seul bloc.

Les conduites tubulaires sont par exemple réalisées en polyéthylène réticulé et bien que flexibles, il est nécessaire de les maintenir sur le support synthétique avec des attaches pour les conformer suivant des courbures prédéterminées. Ainsi, au fur et à mesure que la conduite tubulaire est déroulée et appliquée sur le support synthétique en empruntant un chemin prédéfini, elle est agrafée sur ce support au moyen d'attaches.

Les attaches présentent une forme de cavalier dont les deux pointes sont équipées d'ailettes anti-retour, et elles sont enfoncées à force et à cheval sur la conduite tubulaire à travers le support synthétique au moyen d'une agrafeuse adaptée. Les pointes viennent alors s'ancrer dans ce support et les ailettes anti-retour, tel un harpon, viennent limiter les capacités d'extraction de l'agrafe.

Les attaches sont chargées en grappe dans l'agrafeuse et elles sont extraites successivement au moyen d'une lame qui vient exercer une pression sur la première attache de la grappe pour l'en détacher puis l'engager dans un canal d'extraction et enfin l'enfoncer dans le support synthétique.

On pourra se rapporter au document EP 1 526 292 décrivant de telles grappes d'attaches.

Ainsi, les grappes d'attaches comprennent une pluralité d'attaches en U présentant chacune une partie en arc et deux jambes d'ancrage opposées. Chacune des attaches présente une tranche et deux faces opposées définissant respectivement deux plans tangents parallèles entre eux. Les attaches des grappes d'attaches sont maintenues en rangées, leurs faces opposées en regard, grâce à des liens qui s'étendent d'une face opposée à l'autre, au niveau de ladite partie en arc. Les grappes forment ainsi un ensemble rigide, mais déformable, pour pouvoir rompre les liens et détacher une à une les attaches.

Cependant, après que la grappe a été chargée dans l'agrafeuse, lorsque la lame vient prendre appui sur la première attache de la grappe, elle tend à faire basculer la grappe et partant, la première attache, s'engage dans le canal d'éjection selon une direction inclinée par rapport à l'axe du canal. Aussi, l'énergie mécanique fournie par la lame n'est pas totalement transmise pour enfoncer l'attache dans le support synthétique, et l'enfoncement n'est pas optimal. L'objet du document DE 200 177 260 U1, qui divulgue les caractéristiques du préambule de la revendication 1, présente les mêmes écueils. Aussi, un problème qui se pose et que vise à résoudre la présente invention, est de fournir une grappe d'attaches qui puisse être mise en oeuvre dans une agrafeuse traditionnelle et qui permette d'enfoncer parfaitement les attaches dans le support, sans perte d'énergie.

Dans ce but, la présente invention propose, une grappe d'attaches selon la revendication 1.

Ainsi, une caractéristique de l'invention réside dans la mise en oeuvre de liens flexibles entre les attaches, dénommées également agrafes, qui permettent un mouvement de translation de la première attache par rapport à la seconde attache, vers le canal d'éjection. En effet, grâce aux liens flexibles, qui s'étendent d'une attache à l'autre, pour les relier près de de l'intersection du plan moyen et de la tranche, lorsque la première attache est entrainée en translation selon son propre plan moyen, le lien tend à pivoter autour de ses deux points de fixation opposés sur la première et la deuxième attache, jusqu'à ce que les jambes d'ancrage s'engage dans le canal d'éjection. Ensuite, l'attache peut être parfaitement guidée en translation lorsque la lame poursuit sa course, bien que l'attache exerce une traction sur la deuxième attache jusqu'à la rupture du lien flexible.

Par conséquent, la première attache, dans sa première phase de mouvement pour rejoindre le canal d'éjection, n'est pas retenue par la deuxième attache et le lien qui les relie. Selon l'invention, la grappe présente un plan médian perpendiculaire aux plans moyens de chacune desdites attaches, elle comporte deux pluralités de liens flexibles, pour relier lesdites attaches deux à deux avec deux liens symétriques l'un de l'autre par rapport audit plan médian. De la sorte, les attaches sont plus fermement reliées entre elles et le risque de détachement accidentel, est ténu. Au surplus, la mise en oeuvre de deux liens flexibles symétriques l'un de l'autre par rapport au plan médian, permet un meilleur guidage en translation des attaches lors de l'éjection, ainsi qu'on l'expliquera dans la suite de la description. Selon l'invention, ladite partie en arc de chacune desdites attaches présente deux flancs opposés respectivement inclinés vers ladite trace des tranches desdites attaches. De la sorte, lorsque la première attache est entraînée en translation vers le canal d'éjection, le lien flexible est entraîné librement en pivotement par rapport à la deuxième attache, sans contact avec celle-ci. Partant, l'amplitude de mouvement libre de la première attache par rapport à la deuxième, sans commencer à exercer de traction sur la deuxième attache est importante.

En outre, lesdits liens s'étendent selon une direction sensiblement perpendiculaire aux plans moyens desdites attaches. Aussi, les liens pivotent lors de l'éjection de l'attache, dans le plan médian perpendiculaire au plan moyen, ce qui permet également d'offrir l'amplitude maximale de mouvement libre de la première attache.

De plus, chacune desdites attaches présente, avantageusement, deux oreilles d'entraînement opposées situées respectivement entre lesdites deux jambes d'ancrage et ladite partie en arc. Les oreilles d'entraînement opposées forment ainsi des appuis pour la lame d'éjection de l'agrafeuse, et de la sorte, les attaches conservent leur forme durant l'éjection précisément. Aussi, l'énergie mécanique de la lame d'éjection est mieux transmise aux attaches durant leur éjection.

Préférentiellement, chacune desdites deux jambes d'ancrage opposées de chacune desdites attaches présentent une extrémité de perforation en pointe. De la sorte, la pénétration des jambes d'ancrage à travers le support synthétique est améliorée, et l'effort à fournir pour ce faire est moindre.

Au surplus, chacune desdites deux jambes d'ancrage opposées de chacune desdites attaches présentent une paire d'ailettes anti-retour flexibles. Ainsi, les risques d'arrachement des attaches du support synthétique, sous l'effet des contraintes exercées par la conduite sont atténués. Préférentiellement, les ailettes de ladite paire d'ailettes anti-retour flexibles sont mobiles en pivotement selon ledit plan moyen.

Par ailleurs, lesdites attaches sont espacées les unes des autres, d'une distance comprise entre 5% et 15% de l'épaisseur desdites attaches s'étendant entre leurs deux faces opposées. De la sorte, lorsque la première attache tend à être éjectée, dans la première phase, les liens tendent à provoquer le rapprochement de la première attache vers la deuxième, à mesure qu'ils se distendent. Cela permet d'offrir encore de l'amplitude au mouvement libre de la première attache au cours de l'éjection.

Selon encore un mode de mise en oeuvre de l'invention particulièrement avantageux, la grappe est moulée d'une seule pièce dans un matériau polymère. Elle est par exemple moulée en polyamide. Ainsi, les attaches et les liens flexibles sont moulés ensemble d'une seule pièce dans un matériau polymère, ce qui permet à la fois un conditionnement des grappes sans reprise des attaches une à une, et une installation aisée des grappes sur l'agrafeuse.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique en perspective d'un élément isolé de l'invention ;
- la Figure 2 est une vue schématique partielle en perspective de l'objet de l'invention ;
- la Figure 3 est une vue schématique de côté de l'objet de l'invention dans un dispositif de mise en oeuvre ; et,
- la Figure 4 est une vue schématique de détail de l'objet de la Figure 3.

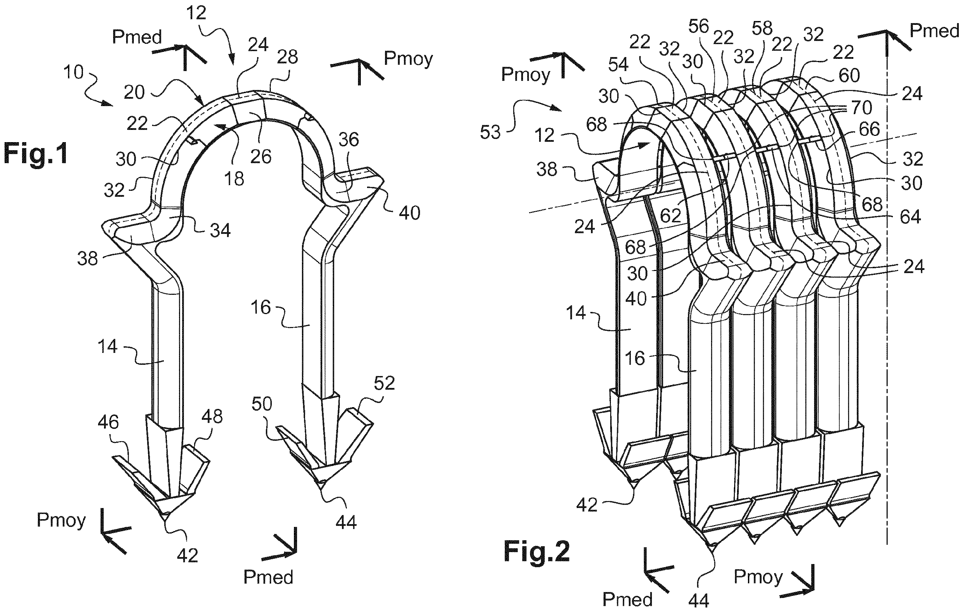

La Figure 1 illustre une attache 10, ou agrafe, en perspective de trois quart, et en forme général de U inversé. Elle présente une partie supérieure en arc 12 et deux jambes d'ancrage 14, 16 opposées et symétriques l'une de l'autre par rapport à un plan médian Pmed. L'attache 10 définit un plan moyen Pmoy perpendiculaire au plan médian Pmed. En outre, l'attache présente deux faces opposées 18, 20 et une tranche 22. L'intersection de la tranche 22 et du plan moyen Pmoy, définissent une trace 24.

La partie en arc 12 s'étend sensiblement selon un demi-cercle d'un rayon moyen compris par exemple entre 5 mm et 15 mm, et selon le mode de mise en oeuvre représenté, de 10 mm.

En outre, la partie en arc 12 présente une section droite, selon le plan médian Pmed, de forme trapézoïdale isocèle. Ainsi, la partie en arc 12 présente deux flancs opposés 26, 28, respectivement inclinés vers la trace 24 de la tranche 22. Les flancs opposés 26, 28 et la tranche 22 définissent ainsi, deux arêtes opposées 30, 32, symétriques l'une de l'autre par rapport à la trace 24.

De plus la partie en arc 12 présente deux portions diamétralement opposées 34, 36 à partir desquelles s'étendent respectivement des oreilles 38, 40 à l'opposé l'une de l'autre en sens opposé. Elles s'étendent en saillie sensiblement perpendiculairement à la tangente aux portions diamétralement opposées 34, 36. Elles s'étendent sur une distance sensiblement inférieure au rayon du demi-cercle précité définit par la partie en arc 12.

Les deux jambes d'ancrage 14, 16 prolongent respectivement les oreilles 38, 40 selon les tangentes aux portions diamétralement opposées 34, 36.

Les jambes d'ancrage 14, 16 présentent respectivement des extrémités en pointe 42, 44 et deux paires d'ailettes anti-retour 46, 48 ; 50, 52. Ces dernières sont mobiles en pivotement selon le plan moyen Pmoy.

Les attaches du type représenté sur la Figure 1, sont moulées en paquet ou en grappes, d'une seule pièce en matériau polymère, telle que représentée sur la Figure 2, au moyen d'une presse à injection. Le matériau polymère est par exemple du polyamide ou du polyéthylène ou encore du polypropylène.

La Figure 2 montre une grappe 53 de quatre attaches identiques 54, 56, 58, 60, reliées respectivement entre elles au moyens de liens flexibles 62, 64, 66. Le nombre d'attaches n'est ici nullement limitatif, et la grappe peut comprendre plus de 20 attaches, et avantageusement plus de 30 attaches.

Les liens flexibles 62, 64, 66 s'étendent longitudinalement selon une direction perpendiculaire aux plans moyens des attaches 54, 56, 58, 60, et ils rejoignent entre elles les arêtes 32, 30 au voisinage de la trace 24, intersection du plan moyen Pmoy et de la tranche 22, et en des points de liaison 68, 70. Ces points de liaison 68, 70, correspondent à des extrémités de fixation des liens flexibles 62, 64, 66. Ils sont situés à environ 45° par rapport au demi-cercle défini par la partie en arc 12. La section des liens flexibles 62, 64, 66, rectangulaire ou circulaire, est par exemple comprise entre 0,4 mm² et 0,6 mm². On observera que la section des liens est conditionnée par leur capacité à s'étendre longitudinalement puis à se rompre sous la contrainte d'étirement, lorsque l'attache terminale est entraînée en translation comme on l'expliquera ci-après. De plus, leur longueur est par exemple comprise entre 2,2 mm et 4,3 mm, en fonction de la taille des attaches.

Au surplus, la grappe 53 présente, en outre, des liens flexibles symétriques des liens flexibles 62, 64, 66, représentés sur la Figure2, par rapport au plan médian Pmed. Ils sont cachés sur la Figure 2 par les parties en arc 12 des attaches 54, 56, 58, 60.

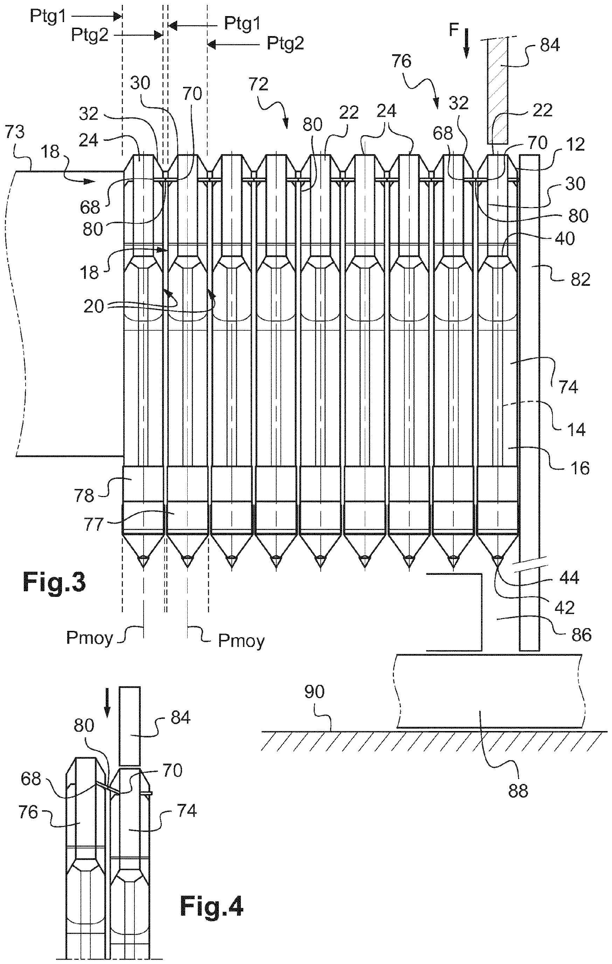

On se référera à présent à la Figure 3 montrant une grappe 72 en appui sur une rampe 76 d'une agrafeuse, et présentant neuf attaches, d'une première attache 74 et une deuxième attache 76, jusqu'à une pénultième 77 et une dernière 78. Les attaches sont reliées entre elles, de la même façon que celles de la grappe 53 illustrée sur la Figure 2, avec deux séries de liens 80, sensiblement parallèles de part et d'autre du plan médian Pmed.

Telles que représentées, le plan moyen Pmoy des attaches de la grappe 72, est perpendiculaire au plan du dessin, lequel est parallèle au plan médian Pmed. On retrouve les deux faces opposées 18, 20 des dernière 78 et pénultième 77 attaches, lesquelles définissent respectivement deux plans tangents opposés Ptg1, Ptg2. On observera que le plan moyen Pmoy de chacune des attaches, s'étend à équidistance entre les plans tangents opposés Ptg1, Ptg2.

Les liens 80 relient les attaches 77, 78 au niveau des points de liaison 68, 70 sur les arêtes 32, 30. Ainsi, les points de liaison 68, 70 sont situés près de la trace 24, ou du milieu de la tranche 22, de chacune des attaches 77, 78. Selon une autre définition de la position des points de liaison 68, 70, ils sont situés sur la tranche 22, vers l'intérieur de l'attache, dans une position écartée des plans tangents opposés Ptg1, Ptg2.

Cette position relative des points de liaison 68, 70 et la longueur des liens 80, conditionnent les avantages techniques procurés par l'invention.

Ainsi, on se reportera sur cette Figure 3, vers l'avant de l'agrafeuse, au niveau des première et deuxième attaches 74, 76.

Tout d'abord, la grappe 72 dans son ensemble, est entraînée à force en translation selon une direction perpendiculaire au plan moyen Pmoy des attaches 78, 77, 76, 74, de la dernière 78 vers la première 74, au moyen d'un élément pesant non représenté. Ainsi, la première attache 74 est en appui contre une plaque d'arrêt 82 de l'agrafeuse. Cette dernière présente une lame 84, dénommée également couteau, qui s'étend au repos au dessus de la grappe 72, et à l'opposé d'une chambre d'éjection 86 à travers laquelle les attaches sont éjectées.

Ainsi, lors de l'agrafage d'une conduite 88 sur un support synthétique 90, la lame 84 est entraînée en translation vers la chambre d'éjection 86 selon la flèche F et elle prend d'abord appui sur la tranche 22 au niveau de la partie en arc 12 et des oreilles 38, 40.

Dans une première phase de mouvement de translation de la première attache 74, vers la chambre d'éjection 86 et selon un plan parallèle à son propre plan moyen Pmoy, et à celui des autres attaches 76 situées à proximité, le lien 80 va à la fois pivoter autour de son point de liaison 68 situé sur l'arête 32 de la deuxième attache 76, et autour de son point de liaison 70 situé sur l'arête 30 de la première attache 74, tout en restant rectiligne.

On se référera également à la Figure 4 illustrant en détail ces mouvements. Le lien 80 est ainsi incliné par rapport à une perpendiculaire du plan moyen Pmoy, tandis que la première attache 74 a été entraînée vers l'orée de la chambre d'éjection 86. Grâce à la possibilité de pivotement du lien flexible 80, la deuxième attache 76 et les suivantes jusqu'à la dernière 78, sont demeurées immobiles sur leur rampe 73. Partant, la partie en arc 12 de la première attache 74, tend à venir se rapprocher de la deuxième attache 76, tandis qu'à l'opposé, les jambes d'ancrage 14, 16, tendent à venir s'appliquer contre l'intérieur de la plaque d'arrêt 82.

Ainsi, en poursuivant le mouvement de la lame d'éjection 84, les jambes d'ancrage 14, 16 s'engagent à travers le canal d'éjection 86 qui peut ensuite les guider en translation.

A ce stade, la lame d'éjection poursuivant sa course, les liens flexibles 80 se distendent puis se rompent. Ils exercent alors une traction sur la deuxième attache 76, qui provoque alors un mouvement de la grappe 72. Cependant ce mouvement est ténu, et surtout, il ne perturbe en rien l'entraînement de la première attache 74 dans le canal d'éjection 86, qui y est déjà engagée, et son éjection autour de la conduite 88 puis son ancrage dans le support synthétique 90.

Ensuite, la lame 84 remonte vers sa position de repos, tandis que la deuxième attache 76 vient s'appliquer contre la plaque d'arrêt 82 sous l'effet de l'élément pesant.

La deuxième attache 76 est ainsi en position pour être éjectée de la même façon que la première 74.

## Revendications

1. Grappe (53 ; 72) d'attaches destinée à être chargée dans une agrafeuse pour pouvoir attacher les conduites tubulaires (88) de plancher chauffant, ladite grappe (53 ; 72) d'attaches comprenant une pluralité d'attaches en U (10) présentant chacune une partie en arc (12) et deux jambes d'ancrage opposées (14, 16), chacune desdites attaches présentant, d'une part deux faces opposées (18, 20) définissant respectivement deux plans tangents (Ptg1, Ptg2) parallèles entre eux et un plan moyen (Pmoy) s'étendant parallèlement à équidistance desdits plans tangents, et d'autre part une tranche (22) définissant une trace (24) à l'intersection dudit plan moyen et de ladite tranche (22), ladite grappe (53 ; 72) d'attaches comportant en outre au moins une pluralité de liens flexibles (62, 64, 66 ; 80) pour relier lesdites attaches deux à deux, leurs faces opposées (18, 20) en regard, les liens flexibles (62, 64, 66 ; 80) présentant chacun deux extrémités de fixation respectivement fixées dans lesdites faces opposées en regard, au niveau de ladite partie en arc (12), ladite grappe présentant un plan médian (Pmed) perpendiculaire aux plans moyens (Pmoy) de chacune desdites attaches (54, 56, 58, 60) ;
**caractérisée en ce qu'**elle comporte deux pluralités de liens flexibles s'étendant longitudinalement selon une direction sensiblement perpendiculaire aux plans moyens (Pmoy) pour relier lesdites attaches deux à deux avec deux liens symétriques l'un de l'autre par rapport audit plan médian (Pmed), tandis que ladite partie en arc (12) de chacune desdites attaches (54, 56, 58, 60) présente deux flancs opposés (26, 28) respectivement inclinés vers ladite trace (24) des tranches (22) desdites attaches,
et **en ce que** lesdites extrémités de fixation sont respectivement fixées au voisinage de ladite trace (24) des tranches desdites attaches (22) dans une position écartée des plans tangents (Ptg1, Ptg2).

2. Grappe d'attache selon la revendication 1, **caractérisée en ce que** chacune desdites attaches (54, 56, 58, 60) présente deux oreilles d'entraînement (38, 40) opposées situées respectivement entre lesdites deux jambes d'ancrage (14, 16) et ladite partie en arc (12).

3. Grappe d'attache selon la revendication 1 ou 2, **caractérisée en ce que** chacune desdites deux jambes d'ancrage opposées (14, 16) de chacune desdites attaches (54, 56, 58, 60) présentent une extrémité de perforation en pointe (42, 44).

4. Grappe d'attache selon l'une quelconque des revendications 1 à 3, **caractérisée en ce que** chacune desdites deux jambes d'ancrage opposées (14, 16) de chacune desdites attaches (54, 56, 58, 60) présentent une paire d'ailettes anti-retour flexibles (46, 48 ; 50, 52).

5. Grappe d'attache selon la revendication 4, **caractérisée en ce que** les ailettes (46, 48 ; 50, 52) de ladite paire d'ailettes anti-retour flexibles sont mobiles en pivotement selon ledit plan moyen (Pmoy).

6. Grappe d'attache selon l'une quelconque des revendications 1 à 5, **caractérisée en ce que** lesdites attaches (54, 56, 58, 60) sont espacées les unes des autres, d'une distance comprise entre 5% et 15% de l'épaisseur desdites attaches s'étendant entre leurs deux faces opposées (18, 20).

7. Grappe d'attache selon l'une quelconque des revendications 1 à 6, **caractérisée en ce qu'**elle est moulée d'une seule pièce dans un matériau polymère.

## Patentansprüche

1. Klammerbündel (53; 72), das in eine Heftmaschine geladen werden soll, um die Rohrleitungen (88) einer Fußbodenheizung befestigen zu können, wobei das Klammerbündel (53; 72) eine Vielzahl von U-förmigen Klammern (10) umfasst, die jeweils einen bogenförmigen Teil (12) und zwei entgegengesetzte Verankerungsstreben (14, 16) aufweisen, wobei jede der Klammern einerseits zwei entgegengesetzte Flächen (18, 20), die jeweils zwei zueinander parallele Tangentialebenen (Ptg1, Ptg2) und eine Mittelebene (Pmoy), die sich parallel in gleichem Abstand von den Tangentialebenen erstreckt, definieren, und andererseits einen Rand (22), der eine Spur (24) am Schnitt der Mittelebene und des Randes (22) definiert, aufweist, wobei das Klammerbündel (53; 72) außerdem mindestens eine Vielzahl von flexiblen Verbindungen (62, 64, 66; 80) zum paarweisen Verbinden der Klammern mit ihren entgegengesetzten Flächen (18, 20) gegenüberliegend umfasst, wobei die flexiblen Verbindungen (62, 64, 66; 80) jeweils zwei Befestigungsenden, die jeweils in den gegenüberliegenden entgegengesetzten Flächen befestigt sind, auf der Höhe des bogenförmigen Teils (12) aufweisen, wobei das Bündel eine Medianebene (Pmed) aufweist, die zu den Mittelebenen (Pmoy) von jeder der Klammern (54, 56, 58, 60) senkrecht ist;
**dadurch gekennzeichnet, dass** es zwei Vielzahlen von flexiblen Verbindungen umfasst, die sich longitudinal in einer zu den Mittelebenen (Pmoy) im Wesentlichen senkrechten Richtung erstrecken, um die Klammern paarweise mit zwei in Bezug auf die Medianebene (Pmed) zueinander symmetrischen Verbindungen zu verbinden, während der bogenförmige Teil (12) von jeder der Klammern (54, 56, 58, 60) zwei entgegengesetzte Flanken (26, 28) aufweist, die jeweils zur Spur (24) der Ränder (22) der Klammern hin geneigt sind,
und dass die Befestigungsenden jeweils in der Nähe der Spur (24) der Ränder der Klammern (22) in einer von den Tangentialebenen (Ptg1, Ptg2) entfernten Position befestigt sind.

2. Klammerbündel nach Anspruch 1, **dadurch gekennzeichnet, dass** jede der Klammern (54, 56, 58, 60) zwei entgegengesetzte Antriebsnocken (38, 40) aufweist, die jeweils zwischen den zwei Verankerungsstreben (14, 16) und dem bogenförmigen Teil (12) liegen.

3. Klammerbündel nach Anspruch 1 oder 2, **dadurch gekennzeichnet, dass** jede der zwei entgegengesetzten Verankerungsstreben (14, 16) von jeder der Klammern (54, 56, 58, 60) ein spitzes Perforationsende (42, 44) aufweist.

4. Klammerbündel nach einem der Ansprüche 1 bis 3, **dadurch gekennzeichnet, dass** jede der zwei entgegengesetzten Verankerungsstreben (14, 16) von jeder der Klammern (54, 56, 58, 60) ein Paar von flexiblen Rückhalteflügeln (46, 48; 50, 52) aufweist.

5. Klammerbündel nach Anspruch 4, **dadurch gekennzeichnet, dass** die Flügel (46, 48; 50, 52) des Paars von flexiblen Rückhalteflügeln gemäß der Mittelebene (Pmoy) schwenkbar beweglich sind.

6. Klammerbündel nach einem der Ansprüche 1 bis 5, **dadurch gekennzeichnet, dass** die Klammern (54, 56, 58, 60) um einen Abstand zwischen 5 % und 15 % der Dicke der Klammern, die sich zwischen ihren zwei entgegengesetzten Flächen (18, 20) erstreckt, voneinander beabstandet sind.

7. Klammerbündel nach einem der Ansprüche 1 bis 6, **dadurch gekennzeichnet, dass** es einteilig aus einem Polymermaterial geformt ist.

## Claims

1. Cluster (53; 72) of attachments intended to be loaded into a stapler in order to be able to attach tubular heated-floor conduits (88), said cluster (53, 72) of fasteners comprising a plurality of U-shaped fasteners (10) each having an arc-shaped part (12) and two opposite anchoring legs (14, 16), each of said fasteners having firstly two opposite faces (18, 20) defining respectively two tangent planes (Ptg1, Ptg2) parallel to each other and a mid-plane (Pmoy) extending parallel at equal distances from said tangent planes, and secondly an edge (22) defining a line (24) at the intersection of said mid-plane and said edge (22), said cluster (53; 72) of fasteners further comprising at least a plurality of flexible links (62, 64, 66; 80) for connecting said fasteners in pairs, with their opposite faces (18, 20) facing each other, the flexible links (62, 64, 66; 80) each having two fixing ends respectively fixed in said opposite facing faces, at said arc-shaped part (12), said cluster having a median plane (Pmed) perpendicular to the mid-planes (Pmoy) of each of said fasteners (54, 56, 58, 60);
**characterised in that** it comprises two pluralities of flexible links extending longitudinally in a direction substantially perpendicular to the mid-planes (Pmoy) in order to connect said fasteners in pairs with two links symmetrical with one another with respect to said median plane (Pmed), while said arc-shaped part (12) of each of said fasteners (54, 56, 58, 60) has two opposite flanks (26, 28) respectively inclined towards said line (24) of the edges (22) of said fasteners,
and **in that** said fixing ends are respectively fixed in the vicinity of said line (24) of the edges of said fasteners (22) in a position separated from the tangent planes (Ptg1, Ptg2).

2. Cluster of fasteners according to claim 1, **characterised in that** each of said fasteners (54, 56, 58, 60) has two opposite drive lugs (38, 40) situated respectively between said two anchoring legs (14, 16) and said arc-shaped part (12).

3. Cluster of fasteners according to claim 1 or claim 2, **characterised in that** each of said two opposite anchoring legs (14, 16) of each of said fasteners (54, 56, 58, 60) have a perforation end in a point (42, 44).

4. Cluster of fasteners according to any of claims 1 to 3, **characterised in that** each of said two opposite anchoring legs (14, 16) of each of said fasteners (54, 56, 58, 60) have a pair of flexible non-return fins (46, 48; 50, 52).

5. Cluster of fasteners according to claim 4, **characterised in that** the fins (46, 48; 50, 52) of said pair of flexible non-return fins are able to pivot on said mid-plane (Pmoy).

6. Cluster of fasteners according to any of claims 1 to 5, **characterised in that** said fasteners (54, 56, 58, 60) are spaced apart from each other, by a distance of between 5% and 15% of the thickness of said fasteners extending between their two opposite faces (18, 20).

7. Cluster of fasteners according to any of claims 1 to 6, **characterised in that** it is moulded in a single piece in a polymer material.
